# EUROPEAN PATENT APPLICATION

(11) **EP 4 764 302 A1**
(43) Date of publication of application: **24.06.2026**
(21) Application number: 24221420.3
(22) Date of filing: 19.12.2024
(51) Int. Cl.: F21S 43/243, F21S 43/245, F21S 43/20

(54) **LIGHT MODULE COMPRISING LIGHT GUIDE AND MOTOR VEHICLE LIGHTING DEVICE**

(71) Applicant: HELLA Saturnus Slovenija d.o.o., 1001 Ljubljana (SI)
(72) Inventor: STAINER, Tomaz, 1260 Ljubljana - Polje (SI); ZAVODNIK, Vid, 1261 Ljubljana-Dobrunje (SI); SMUC, Matevz, 1000 Ljubljana (SI)
(74) Representative: Behr-Wenning, Gregor

(57) **Abstract**

The invention relates to a light module (10) for a motor vehicle lighting device (100), at least comprising a thick-wall light guide body (1) and an associated light source unit (2) comprising at least one light source (21), wherein the light from the light source unit (2) is coupled into the light guide body (1) via an incoupling surface (11), and wherein the light guide body (1) features subsurface laser engravings (12) acting as scattering centres for light outcoupling.

## Description

The present invention relates to a light module with a thick-wall light guide body and to a motor vehicle lighting device comprising such a light module.

### PRIOR ART

Light modules with thick-wall optics, in particular as light guide bodies, are often used in modern motor vehicle lighting devices in order to serve as a legally required lighting function, e.g. a brake light or a direction indicator light, or as a decorative light signature. Such thick-wall optics are typically formed by plate-like light guide bodies made of a polymer or optical glass, wherein a narrow side surface serves for incoupling of light from associated light sources like LED units. The light is guided within the light guide body in particular by total reflexion and coupled out e.g. of an opposite narrow side surface forming a so-called "edge light". The outcoupling surface of the light guide body typically features dedicated microstructures, for instance groove or dimple pattern, acting as light diffusing elements in order to distribute and homogenize the emitted light in a way to fulfil legal or aesthetic requirements. Since these surface microstructures are very susceptible to mechanical wear and contamination, the outcoupling surfaces need to be protected behind the cover lens of the associated lighting device. This restricts the design freedom, particularly for the use of the light modules as light signatures, grille lighting, illuminated brand logos or similar, i.e. for design applications where a cover lens can be distracting from an aesthetic point of view.

### DISCLOSURE OF THE INVENTION

It is an object of the present invention to propose a light module with a thick-wall optic for a motor vehicle lighting device allowing for particularly versatile design concepts.

This object is achieved by a light module as taught by claim 1 and a lighting device according to claim 6. Advantageous embodiments are defined in the subclaims.

The invention discloses a light module at least comprising a thick-wall light guide body and an associated light source unit comprising at least one light source, wherein the light from the light source unit is coupled into the light guide body via an incoupling surface, and wherein the light guide body features subsurface laser engravings acting as scattering centres for light outcoupling.

By introducing subsurface scattering centres, the microstructures on the outcoupling surface as known from the prior art can be omitted. Therefore, the outcoupling surface can be designed as a smooth and robust surface, while the scattering centres are protected inside the light guide body. The outcoupling surface may thus be exposed to rather harsh environments without impairing its lighting performance by wear or contamination of the outcoupling entities.

As a further protection measure, the light guide body can be provided with a wear-resistant coating, e.g. by lacquering, at least in sections. Such a coating is generally not suitable for light guide bodies according to the prior art, since it tends to compromise the functionality of the microstructures on the outcoupling surface.

Subsurface laser engraving is a technique which introduces microscopic cracks, voids, or bubbles into the volume of a transparent polymer, e.g. polymethyl methacrylate (PMMA), or glass body. It works by focusing a pulsed, high-power laser at precise spots within the transparent body. The laser-material interaction creates tiny, permanent disruptions -such as microfractures or bubbles- beneath the surface without damaging the exterior. These spots are arranged to form intricate 2D or 3D pattern, guided by a digital model. The technique is also referred to as vitrography.

In a particular embodiment of the light module the size, the density and the arrangement of the subsurface laser engravings are designed in such a way, that the light coupled out of the light guide body features a diffuse light distribution. Such a diffusor effect yields a homogeneous light impression, which might both be legally required or desirable from an aesthetic point of view. In principle the laser engraving technique offers a great variety of attainable light impressions ranging from homogeneously glowing surfaces to complex 3D light pattern.

For instance, the light source unit can feature several LED emitters in a regular arrangement covering an area corresponding to the area of the incoupling surface of the light guide body. More preferably, the light source unit comprises an auxiliary light guide body, wherein the light from the light source is coupled into the auxiliary light guide body and outcoupled via an outcoupling surface of the auxiliary light guide body facing the incoupling surface of the light guide body The auxiliary light guide body emits over an extended surface area so that the incoupling surface of the light guide body receives a homogeneous illumination. This yields a particularly uniform distribution of the light coupled out of the light guide body.

A further embodiment features a light guide body with a reflective coating on a surface section facing the incoupling surface. This results in an additional redirection and thus homogenisation of the light within the light guide body before it hits the subsurface laser engravings.

The invention furthermore relates to a motor vehicle lighting device, at least comprising a light module according to one of the aforementioned embodiments. In particular, the lighting device is free of a cover lens, wherein the light guide body of the light module is partly exposed to the operating environment of the lighting device. Omitting the cover lens is technically possible because the thick-wall optic of the light module is robust against external influences due to the subsurface laser engravings being protected inside the light guide body. The ability to dispense with a cover lens opens up new possibilities for the design of such lighting devices. In order to further improve the wear resistance of the light module, the light guide body may feature a wear-resistant coating at least covering its section being exposed to the operating environment.

The light module of the motor vehicle lighting device can be designed as a position light, a daytime running light, a direction indicator light, a rear light, a brake light, or wherein the light module is designed for a further signalling function or a decorative light function, e.g. an illuminated brand logo.

### PREFERRED EMBODIMENTS

Additional details, characteristics and advantages of the object of the invention are disclosed in the following description of the respective figures - which in an exemplary and schematic fashion - show preferred embodiments of the invention.
- Fig. 1:: a first embodiment of the light module,
- Fig. 2:: a second embodiment,
- Fig. 3:: a third embodiment,
- Fig. 4:: a fourth embodiment,
- Fig. 5:: a fifth embodiment, and
- Fig. 6:: an embodiment of the motor vehicle lighting device.

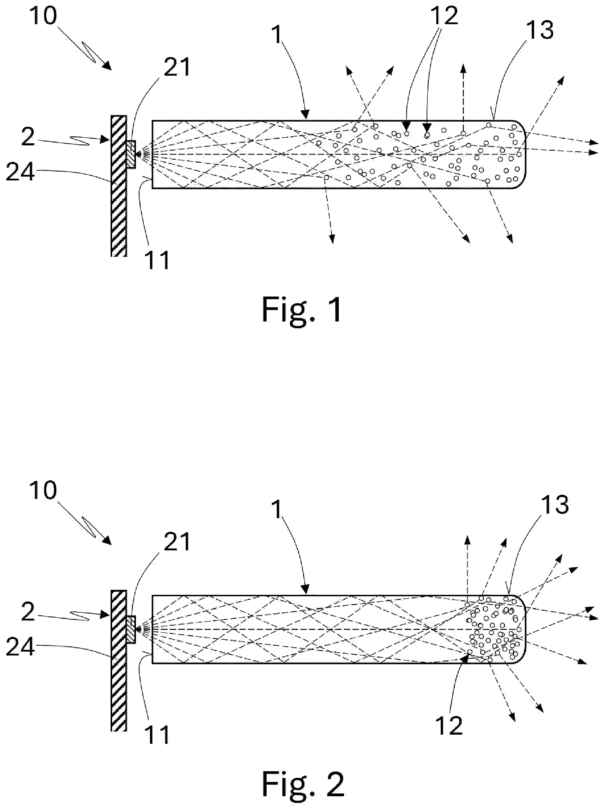

Figs. 1 - 5 show cross-sections of different embodiments of the light module 10 for a motor vehicle lighting device, the thick-wall light guide body 1 and the associated light source unit 2 with the light source 21, wherein the light from the light source unit 2 is coupled into the light guide body 1 via the incoupling surface 11, which is exemplarily a narrow side surface in Figs. 1 - 4. The light is guided inside the light guide body 1 by internal reflections and scattered at the subsurface laser engravings 12 acting as scattering centres for light outcoupling. The laser engravings 12 are mainly micron-sized cracks, voids or bubbles in the volume of the light guide body 1, which is formed from optical glass or a transparent polymer. The detailed spatial distribution of the laser engravings 12 determines which surface section of the light guide body 1 constitutes the light outcoupling surface 13.

The size, density and arrangement of the subsurface laser engravings 12 are designed in such a way, that the light coupled out of the light guide body 1 features a diffuse light distribution, i.e., the outcoupling surface 13 exhibits a homogeneous glow. In the second embodiment of Fig. 2 the laser engravings 12 are concentrated below the surface opposite to the incoupling surface 11, so that the light outcoupling mainly takes place via the distal end of the light guide body 1, thus forming a so-called "edge light".

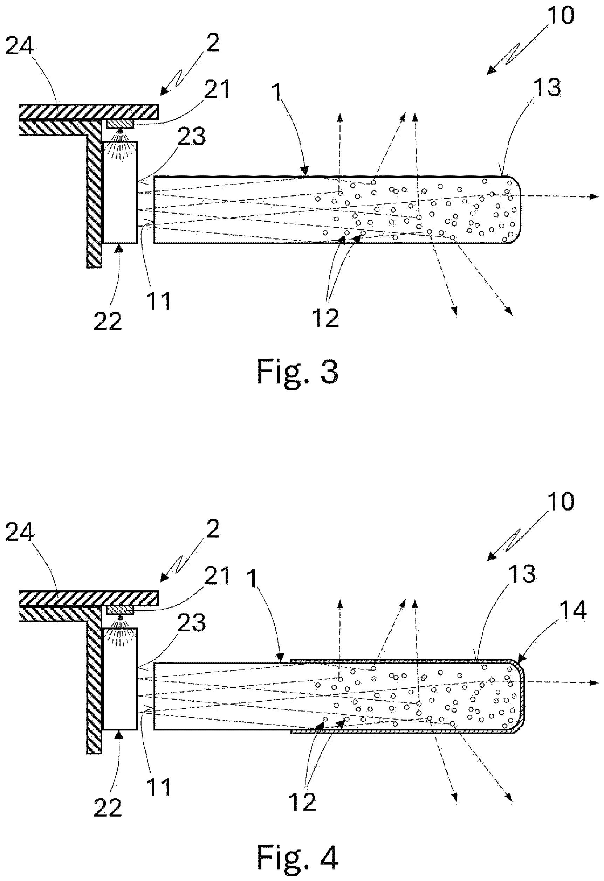

The light source units 2 each comprise the LED light source 21 on the PCB 24, wherein the third and fourth embodiments of Fig. 3 and Fig. 4 furthermore comprise the auxiliary light guide body 22. The light from the light source 21 is coupled into the auxiliary light guide body 22 via a side surface and outcoupled via the outcoupling surface 23 facing the incoupling surface 11 of the light guide body 1. The dimensions of the outcoupling surface 23 essentially correspond to those of the incoupling surface 11. This yields a more uniform illumination of the incoupling surface 11 and results in a more homogeneous light distribution of the light coupled out of the light guide body 1 via the outcoupling surface 13.

In the light module 10 according to the fourth embodiment of Fig. 4 the light guide body 1 features the wear-resistant coating 14 along its sections constituting the light outcoupling surface 13. The wear-resistant coating 14 is a transparent protection layer, e.g. applied by lacquering.

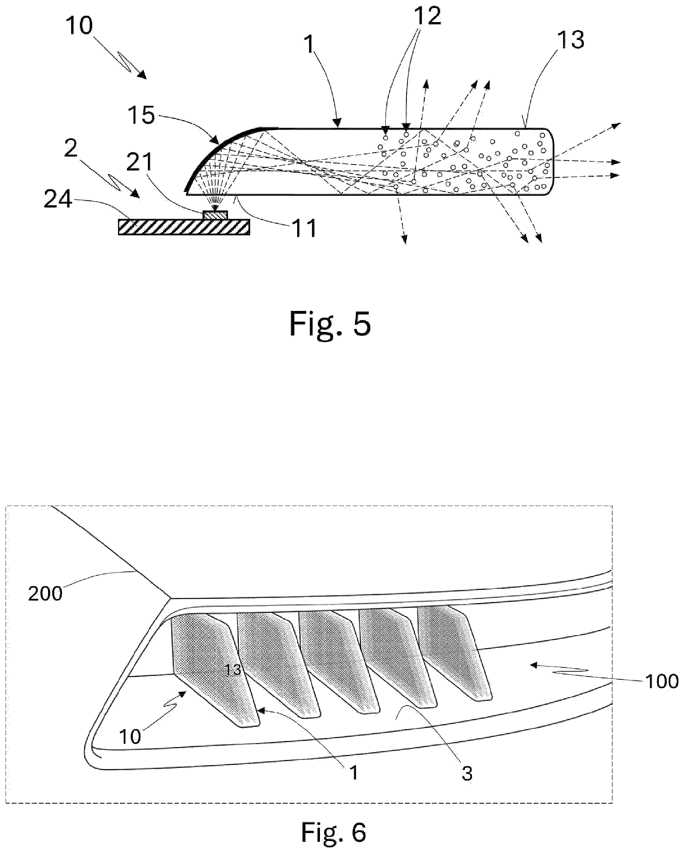

In the light module 10 according to the fifth embodiment of Fig. 5, the light guide body 1 features the reflective coating 15 on the surface section facing the incoupling surface 11. The incoupling surface 11 is a proximal surface section of the long side of the light guide body 1 and the incoupled light is reflected at the reflective coating 15 towards the subsurface laser engravings 12 in the distal section of the light guide body 1.

Fig. 6 shows a perspective view of an embodiment of the motor vehicle lighting device 100 with several light modules 10 designed as daytime running lights. The light modules 1 comprise plate-like light guide bodies 1, which emit light mainly via the narrow side surfaces as the light outcoupling surfaces 13, thus forming "edge lights". The lighting device 100 is free of a cover lens and the light guide bodies 1 are partly exposed to the operating environment of the lighting device 100, just framed by the car body 200. The corresponding light source units and the light incoupling surfaces of the light guide bodies 1 are hidden and protected behind the floor panel 3.

### List of Numerals

- 10: light module
- 1: light guide body
- 11: incoupling surface
- 12: laser engravings
- 13: outcoupling surface
- 14: wear-resistant coating
- 15: reflective coating
- 2: light source unit
- 21: light source
- 22: auxiliary light guide body
- 23: outcoupling surface
- 24: PCB
- 3: floor panel
- 100: motor vehicle lighting device
- 200: car body

## Claims

1. Light module (10) for a motor vehicle lighting device (100), at least comprising a thick-wall light guide body (1) and an associated light source unit (2) comprising at least one light source (21), wherein the light from the light source unit (2) is coupled into the light guide body (1) via an incoupling surface (11),
**characterised in that** the light guide body (1) features subsurface laser engravings (12) acting as scattering centres for light outcoupling.

2. Light module (10) according to claim 1, **characterised in that** the size, the density and the arrangement of the subsurface laser engravings (12) are designed in such a way, that the light coupled out of the light guide body (1) features a diffuse light distribution.

3. Light module (10) according to claim 1 or 2, **characterised in that** light guide body (1) features a wear-resistant coating (14) at least in sections.

4. Light module (10) according to one of the previous claims, **characterised in that** the light guide body (1) features a reflective coating (15) on a surface section facing the incoupling surface (11).

5. Light module (10) according to one of the previous claims, **characterised in that** the light source unit (2) at least comprises an auxiliary light guide body (22), wherein the light from the light source (21) is coupled into the auxiliary light guide body (22) and outcoupled via an outcoupling surface (23) of the auxiliary light guide body (22) facing the incoupling surface (11) of the light guide body (1).

6. Motor vehicle lighting device (100) at least comprising a light module (10) according to one of the previous claims.

7. Motor vehicle lighting device (100) according to claim 6, **characterised in that** lighting device (100) is free of a cover lens, wherein the light guide body (1) of the light module (10) is partly exposed to the operating environment of the lighting device (100).

8. Motor vehicle lighting device (100) according to claim 6 or 7, **characterised in that** the light guide body (1) features a wear-resistant coating (14) at least covering its section being exposed to the operating environment.

9. Motor vehicle lighting device (100) according to one of the claims 6 to 8, wherein the light module (10) is designed as a position light, a daytime running light, a direction indicator light, a rear light, a brake light, or wherein the light module is designed for a further signalling function or a decorative light function.
